# EUROPÄISCHE PATENTSCHRIFT

(11) **EP 2 979 379 B1**
(45) Veröffentlichungstag und Bekanntmachung des Hinweises auf die Patenterteilung: **30.03.2022**
(21) Anmeldenummer: 14728121.6
(22) Anmeldetag: 23.05.2014
(51) Int. Cl.: H04J 3/06, H04J 3/14

(54) **VERFAHREN ZUR ZEITSYNCHRONISATION IN EINEM KOMMUNIKATIONSNETZ MIT EINER VIELZAHL VON NETZKNOTEN**
METHOD FOR TIME SYNCHRONISATION IN A COMMUNICATION NETWORK WITH A PLURALITY OF NODES
PROCÉDÉ DE SYNCHRONISATION D'HORLOGE DANS UN RÉSEAU DE COMMUNICATION AVEC PLUSIEURS NOEDS

(30) Priorität: 10.06.2013 DE 102013210775
(43) Veröffentlichungstag der Anmeldung: 03.02.2016
(73) Patentinhaber: Siemens Aktiengesellschaft, 80333 München (DE)
(72) Erfinder: ARMBRUSTER, Michael, 80339 München (DE); BUHL, Michael, Bernhard, 85567 Grafing (DE); OBRADOVIC, Dragan, 85521 Ottobrunn (DE)
(86) Internationale Anmeldenummer: PCT/EP2014/060699
(87) Internationale Veröffentlichungsnummer: WO 2014/198517

(56) Entgegenhaltungen:
- US-A1- 2010 098 202
- US-A1- 2013 100 832
- "7. Clock synchronization model for a bridged local area network (Informative) ; as-mjt-clause-7-d0-1009", IEEE DRAFT; AS-MJT-CLAUSE-7-D0-1009, IEEE-SA, PISCATAWAY, NJ USA, Bd. 802.1, Nr. d0-1009, 14. Oktober 2009 (2009-10-14), Seiten 1-8, XP068007692, [gefunden am 2009-10-14]
- MICHEL OUELLETTE ET AL: "Simulations of a chain of Telecom Boundary Clocks combined with Synchronous Ethernet for phase/time transfer", PRECISION CLOCK SYNCHRONIZATION FOR MEASUREMENT CONTROL AND COMMUNICATION (ISPCS), 2011 INTERNATIONAL IEEE SYMPOSIUM ON, IEEE, 12. September 2011 (2011-09-12), Seiten 105-113, XP031974494, DOI: 10.1109/ISPCS.2011.6070143 ISBN: 978-1-61284-893-8
- "Epsilon Synchronization Supply Unit Model ESSU", , 23. Juli 2012 (2012-07-23), Seiten 1-3, XP055132496, Gefunden im Internet: URL:http://www.spectracomcorp.com/Portals/ 0/products/pdf/Epsilon_Model_ESSU.pdf [gefunden am 2014-07-30]
- JASPERNEITE J ET AL: "Enhancements to the time synchronization standard IEEE-1588 for a system of cascaded bridges", FACTORY COMMUNICATION SYSTEMS, 2004. PROCEEDINGS. 2004 IEEE INTERNATIO NAL WORKSHOP ON VIENNA, AUSTRIA SEPT. 22-24, 2004, PISCATAWAY, NJ, USA,IEEE, 22. September 2004 (2004-09-22), Seiten 239-244, XP010756406, DOI: 10.1109/WFCS.2004.1377716 ISBN: 978-0-7803-8734-8
- "Dual Time Scale in Factory & Energy Automation ; as-goetz-ind-req-0712-v2", IEEE DRAFT; AS-GOETZ-IND-REQ-0712-V2, IEEE-SA, PISCATAWAY, NJ USA, vol. 802.1, no. v2, 16 July 2012 (2012-07-16), pages 1-26, XP068008500, [retrieved on 2012-07-16]
- YASUYUKI KOZAKAI ET AL: "Keeping clock accuracy on a master clock failure in substation network", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 25-29, XP031780883, ISBN: 978-1-4244-5978-0

## Beschreibung

Die Erfindung betrifft ein Verfahren zur Zeitsynchronisation in einem Kommunikationsnetz mit einer Vielzahl von Netzknoten sowie ein entsprechendes Kommunikationsnetz.

In Kommunikationsnetzen mit einer Vielzahl von Netzknoten ist es oftmals erforderlich, dass die von den Netzknoten durchgeführten Prozesse aufeinander abgestimmt sind. Hierzu werden Verfahren zur Zeitsynchronisation verwendet, bei denen in den Netzknoten enthaltene Uhren auf die Uhr eines sog. Masterknotens synchronisiert werden. Ein Beispiel eines Verfahrens zur Zeitsynchronisation ist das sog. Precision Time Protocol, das im Standard IEEE 1588 bzw. IEEE 1588v2 definiert ist. In diesem Protokoll wird eine Synchronisationsnachricht mit dem Zeitstempel der Uhr des Masterknotens an andere Netzknoten in der Form sog. Slaveknoten ausgesendet. Die Slaveknoten aktualisieren die in der Synchronisationsnachricht enthaltene Zeitinformation basierend auf von ihnen geschätzten Verzögerungen, welche die Übertragungszeit der Synchronisationsnachricht vom vorhergehenden Netzknoten sowie eine interne Verarbeitungszeit berücksichtigen.

Herkömmliche Verfahren zur Zeitsynchronisation weisen den Nachteil auf, dass im Falle eines Fehlers im Masterknoten die Synchronisation in allen Slaveknoten fehlerhaft wird, was zu einer Fehlerausbreitung hinsichtlich des Zeitverhaltens im gesamten Kommunikationsnetz führt. In der Folge kann für sämtliche Teile des Netzes keine Synchronität mehr sichergestellt werden.

Die Druckschrift "7. Clock synchronization model for a bridged local area network (Informative); as-mjt-clause-7-d0-1009", IEEE DRAFT; AS-MJT-CLAUSE-7-D0-1009, IEEE-SA, PISCATAWAY, NJ USA, Bd. 802.1, Nr. d0-1009, 14. Oktober 2009, Seiten 1 bis 8, offenbart ein Verfahren zur Zeitsynchronisation in einem Kommunikationsnetz, das ein Backbone-Netz, ein Zugangsnetz und ein lokales Netz umfasst. Die Zeitsynchronisation erfolgt basierend auf einem Masterknoten im Backbone-Netz. Sollte die Verbindung zwischen dem lokalen Netz und dem Zugangsnetz unterbrochen werden, wird ein Netzknoten in dem lokalen Netz als neuer Masterknoten ausgewählt, auf dessen Uhr sich dann die Knoten im lokalen Netz synchronisieren.

Ein Dokument US 2010/0098202 A1 beschreibt, dass in einem Kommunikationsnetz, eine Netzwerkverbindungsvorrichtung eine Zeitinformation eines "grand masters" zur Erreichung einer Zeitsynchronisierung akzeptiert. Im Folgenden fordert die Netzwerkverbindungsvorrichtung "slave nodes" auf mit ihr in Zeitsynchronisierung zu sein, um die Zeitsynchronisierung zu erreichen. Auch wenn der "grand master" entfernt wird oder abstürzt, wenn ein neuer "slave node" hinzugefügt wird, oder wenn ein "hack node" versucht das Kommunikationsnetz zu hacken, fordert die Netzwerkverbindungsvorrichtung die "slave nodes" noch periodisch auf in Zeitsynchronisierung mit ihr zu sein, so dass die Zeitsynchronisierung innerhalb des Kommunikationsnetzwerks nicht negativ beeinflusst wird.

In der Schrift "Dual Time Scale in Factory & Energy Automation, V1.02; White Paper about Industrial Requirements and Concepts @ Time Synchronization (IEEE 802.1ASbt)" von F.-J. Goetz et al., "), https:// www.ieee802.org/1/files/public/docs2012/as-goetz-ind-req-0712-v2.pdf, veröffentlicht am 16-07-2012, werden Synchronisationsnetzwerke mit mehreren GrandMastern und Synchronisation in Teilnetzen offenbart. Aufgabe der Erfindung ist es, ein Verfahren zur Zeitsynchronisation in einem Kommunikationsnetz zu schaffen, bei dem eine Fehlerausbreitung im Falle einer fehlerhaften Zeitsynchronisation begrenzt wird.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Zeitsynchronisation in einem Kommunikationsnetz mit einer Vielzahl von Netzknoten, wobei die Netzknoten jeweils eine Uhr umfassen und ein Netzknoten ein globaler Masterknoten ist, auf dessen Uhr die Uhren von anderen Netzknoten zu synchronisieren sind. In dem Kommunikationsnetz sind ein oder mehrere Teilnetze festgelegt, welche jeweils mehrere Netzknoten aus dem Kommunikationsnetz umfassen, wobei eines oder mehrere der Teilnetze vorbestimmte Teilnetze darstellen, in denen jeweils ein vorbestimmter Netzknoten sowohl die Funktion eines globalen Slaveknotens als auch die Funktion eines lokalen Masterknotens hat und der oder die anderen Netzknoten des jeweiligen vorbestimmten Teilnetzes lokale Slaveknoten sind.

Im erfindungsgemäßen Verfahren wird eine globale Synchronisation durchgeführt, bei der zwischen Netzknoten erste Synchronisationsnachrichten mit einer Zeitinformation übermittelt werden, welche auf der Uhr des globalen Masterknotens basiert, wobei sich die vorbestimmten Netzkoten in ihrer Funktion als globale Slaveknoten auf die Uhr des globalen Masterknotens synchronisieren. Zur Durchführung der globalen Synchronisation können an sich bekannte Synchronisationsverfahren eingesetzt werden, insbesondere kann die Synchronisation auf dem oben erwähnten Precision Time Protocol bzw. auf den Standards IEEE 1588 oder IEEE 1588v2 oder IEC 61158 oder IEEE 802.1AS basieren.

Neben der oben beschriebenen globalen Synchronisation wird im erfindungsgemäßen Verfahren in jedem vorbestimmten Teilnetz separat eine lokale Synchronisation durchgeführt, bei der zwischen Netzknoten zweite Synchronisationsnachrichten mit einer Zeitinformation übermittelt werden, welche auf der Uhr des vorbestimmten Netzknotens in seiner Funktion als lokaler Masterknoten basiert, wobei sich die lokalen Slaveknoten des jeweiligen vorbestimmten Teilnetzes auf die Uhr des vorbestimmten Netzknotens synchronisieren.

Für die lokale Synchronisation können analog die oben definierten Standards verwendet werden, die für die globale Synchronisation eingesetzt werden. Es muss dabei lediglich sichergestellt werden, dass die Synchronisation nur auf die Teilnetze beschränkt ist, was in geeigneter Weise über Kennzeichner in den zweiten Synchronisationsnachrichten erreicht werden kann.

Im Falle, dass in einem vorbestimmten Teilnetz ein außerhalb des vorbestimmten Teilnetzes verursachter Fehler in der globalen Synchronisation detektiert wird, bricht der vorbestimmte Netzknoten des vorbestimmten Teilnetzes die Synchronisation seiner Uhr auf die Uhr des globalen Masterknotens ab. Nichtsdestotrotz wird die lokale Synchronisation in dem vorbestimmten Teilnetz fortgesetzt. Im Falle eines fehlerhaften globalen Masterknotens bleibt somit zumindest noch innerhalb von vorher definierten Teilnetzen die Synchronität erhalten.

Erfindungsgemäß wird in dem vorbestimmten Teilnetz ein Fehler in der globalen Synchronisation dann detektiert, wenn der vorbestimmte Netzknoten feststellt, dass die empfangene erste Synchronisationsnachricht fehlerhaft ist und/oder wenn der vorbestimmte Netzknoten feststellt, dass eine Abweichung zwischen einer sich aus den ersten Synchronisationsnachrichten ergebenden Zeit und einer sich aus der Uhr des vorbestimmten Netzknotens ergebenden Zeit eine vorbestimmte Schwelle überschreitet.

Mit dem erfindungsgemäßen Verfahren wird erreicht, dass ein Fehler in der globalen Synchronisation nicht in Teilnetze des Kommunikationsnetzes übertragen wird, sondern dort weiterhin eine lokale Synchronisation durchgeführt wird. Auf diese Weise wird eine Fehlerfortpflanzung eines Synchronisationsfehlers in vorab festgelegte Teilnetze vermieden.

In einer besonders bevorzugten Ausführungsform wird das erfindungsgemäße Verfahren in einem Kommunikationsnetz eingesetzt, das neben den Teilnetzen ferner ein oder mehrere einzelne Netzknoten umfasst, welche zu keinem Teilnetz gehören. Diese einzelnen Netzknoten werden in die globale Synchronisation einbezogen, d.h. auch diese Netzknoten synchronisieren sich über erste Synchronisationsnachrichten und leiten diese Synchronisationsnachrichten auch weiter.

Gegebenenfalls kann ein einzelner Netzknoten ohne zugeordnetes Teilnetz ein globaler Masterknoten sein. Vorzugsweise ist der globale Masterknoten jedoch ein Netzknoten eines weiteren Teilnetzes, das in dem Kommunikationsnetz enthalten ist. In diesem Fall übernimmt der globale Masterknoten ferner die Funktion eines lokalen Masterknotens und der oder die anderen Netzknoten des weiteren Teilnetzes sind lokale Slaveknoten. In dem weiteren Teilnetz wird analog zu den vorbestimmten Teilnetzen separat eine lokale Synchronisation durchgeführt, bei der zwischen Netzknoten zweite Synchronisationsnachrichten mit einer Zeitinformation übermittelt werden, welche auf der Uhr des globalen Masterknotens in seiner Funktion als lokaler Masterknoten basiert, wobei sich die lokalen Slaveknoten des weiteren Teilnetzes auf die Uhr des globalen Masterknotens synchronisieren. Durch die zusätzliche lokale Synchronisation in einem weiteren Teilnetz kann erreicht werden, dass eine fehlerhafte Funktion des globalen Masterknotens schnell festgestellt wird, so dass das Aussenden von Synchronisationsnachrichten mit falscher Zeitinformation frühzeitig verhindert werden kann.

In einer weiteren Variante des erfindungsgemäßen Verfahrens sind alle Teilnetze des Kommunikationsnetzes bis auf das weitere Teilnetz vorbestimmte Teilnetze. Hierdurch wird eine lokale Synchronisation übergreifend im gesamten Kommunikationsnetz sichergestellt.

In einer weiteren Ausführungsform des erfindungsgemäßen Verfahrens werden die zweiten Synchronisationsnachrichten ausschließlich zwischen Netzknoten des jeweiligen Teilnetzes übermittelt, in dem die lokale Synchronisation durchgeführt wird. Dies kann insbesondere dadurch erreicht werden, dass in den zweiten Synchronisationsnachrichten jeweils spezifiziert ist, zu welchem Teilnetz die zweite Synchronisationsnachricht gehört.

Die einzelnen Teilnetze können beispielsweise als sog. VLANs definiert sein (VLAN = Virtual Local Area Network), wobei VLANs hinlänglich aus dem Stand der Technik bekannt sind. Über einen entsprechenden VLAN-Tag kann dabei die Spezifikation des entsprechenden Teilnetzes in den zweiten Synchronisationsnachrichten erreicht werden.

Insbesondere kann in einer bevorzugten Variante des erfindungsgemäßen Verfahrens ein Fehler in der globalen Synchronisation in einem vorbestimmten Teilnetz dann detektiert werden, wenn in dem vorbestimmten Netzknoten des vorbestimmten Teilnetzes innerhalb einer vorgegebenen Zeitspanne keine erste Synchronisationsnachricht mehr empfangen wird.

In einer besonders bevorzugten Variante des erfindungsgemäßen Verfahrens wird im Falle, dass in einem Teilnetz, welches das vorbestimmte und gegebenenfalls auch das weitere Teilnetz sein kann, oder in einem einzelnen, zu keinem Teilnetz gehörigen Netzknoten ein Fehler in der globalen und/oder lokalen Synchronisation detektiert wird, der in dem Teilnetz oder dem einzelnen Netzknoten verursacht ist, das Teilnetz oder der einzelne Netzknoten in dem Kommunikationsnetz deaktiviert, d.h. das einzelne Teilnetz bzw. der einzelne Netzknoten sind dann nicht mehr Teil des Kommunikationsnetzes. Hierdurch werden effizient fehlerhaft arbeitende Netzknoten aus dem Kommunikationsnetz entfernt.

Vorzugsweise ist jedem Teilnetz des Kommunikationsnetzes eine vorbestimmte Funktion zugeordnet, welche durch die Netzknoten des jeweiligen Teilnetzes ausgeführt wird. Diese vorbestimmte Funktion kann oftmals auch beim Ausfall der globalen Synchronisation weiter fortgesetzt werden. Die Netzknoten eines Teilnetzes können dabei die vorbestimmte Funktion gemeinsamen durchführen. Ebenso können die Netzknoten eines Teilnetzes redundante Netzknoten sein, welche die gleiche vorbestimmte Funktion durchführen.

Das erfindungsgemäße Verfahren zur Zeitsynchronisation kann in beliebigen technischen Anwendungsgebieten eingesetzt werden. Insbesondere ist das Kommunikationsnetz dabei Bestandteil eines Verkehrsmittels, wie z.B. eines Schienenfahrzeugs oder eines Kraftfahrzeugs oder eines Flugzeugs, wobei die Netzknoten Steuereinheiten in dem Verkehrsmittel repräsentieren.

Neben dem oben beschriebenen Verfahren betrifft die Erfindung ferner ein Kommunikationsnetz mit einer Vielzahl von Netzknoten, wobei die Netzknoten zur Durchführung des erfindungsgemäßen Verfahrens bzw. einer oder mehrerer bevorzugter Varianten des erfindungsgemäßen Verfahrens eingerichtet sind.

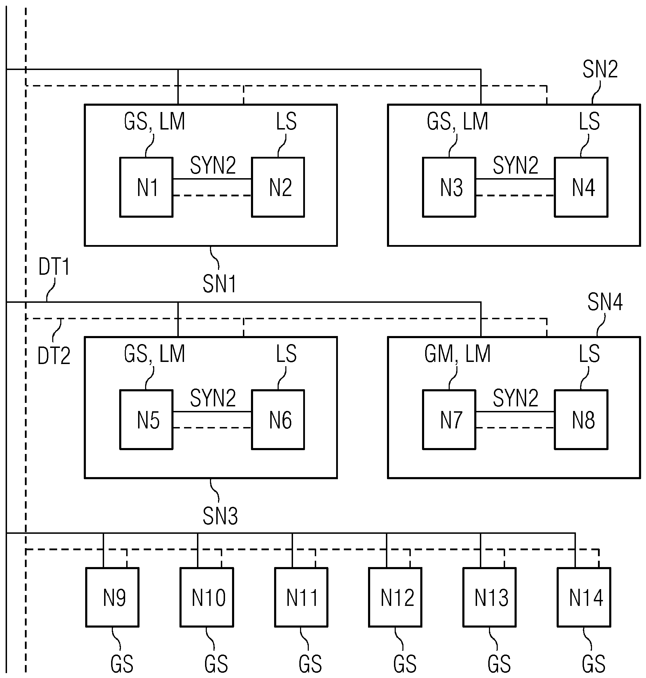

Ein Ausführungsbeispiel der Erfindung wird nachfolgend anhand der beigefügten Fig. 1 beschrieben. Diese Figur zeigt eine schematische Darstellung eines Kommunikationsnetzes, in dem eine Variante des erfindungsgemäßen Verfahrens zur Zeitsynchronisation durchgeführt wird.

Das in Fig. 1 gezeigte Kommunikationsnetz umfasst eine Vielzahl von Netzknoten N1, N2, N3, ..., N14. Das Kommunikationsnetz kann dabei in beliebigen technischen Anwendungen eingesetzt werden. In einer bevorzugten Verwendung stellen die einzelnen Netzknoten die Komponenten eines Flugsteuer- oder Fahrsteuersystems in einem Flugzeug bzw. Fahrzeug (z.B. Schienenfahrzeug oder Kraftfahrzeug) dar. Die Netzknoten N1 bis N8 können z.B. zentrale Steuerrechner in dem System sein, wohingegen die Netzknoten N9 bis N14 beispielsweise Sensoren bzw. Aktoren darstellen. In dem Kommunikationsnetz der Fig. 1 können die einzelnen Netzknoten miteinander über logische Datentransportkanäle kommunizieren, wobei beispielhaft ein Datentransportkanal DT1 mit durchgezogenen Linien und ein weiterer Datentransportkanal DT2 mit gestrichelten Linien angedeutet ist. Das Kommunikationsnetz umfasst vier Teilnetze SN1, SN2, SN3 und SN4, welche jeweils zwei Netzknoten N1, N2 bzw. N3, N4 bzw. N5, N6 bzw. N7, N8 enthalten. Die Netzknoten eines jeweiligen Teilnetzes können gemeinsam eine Funktion übernehmen oder redundant ausgestaltet sein. Im letzteren Fall führt jeder Netzknoten in dem Teilnetz die gleiche Funktion aus, wodurch das System, in dem das Kommunikationsnetz eingesetzt wird, besser gegen Ausfälle von Netzknoten geschützt ist.

Jeder der Netzknoten aus Fig. 1 umfasst eine interne Uhr mit einer bestimmten Taktfrequenz, wobei die Uhren in dem Kommunikationsnetz untereinander synchronisiert werden. Dabei wird die nachfolgend beschriebene hierarchische Synchronisation verwendet, bei der eine globale Synchronisation der Uhren über die Teilnetze hinweg sowie eine lokale Synchronisation der Uhren innerhalb der Teilnetze erreicht wird. Zur Durchführung der Synchronisierung ist in dem Kommunikationsnetz der Fig. 1 ein globaler Masterknoten GM festgelegt, welcher der Netzknoten N7 des Teilnetzes SN4 ist. In den anderen Teilnetzen sind entsprechende globale Slaveknoten GS festgelegt. Für das Teilnetz SN1 ist der globale Slaveknoten der Knoten N1, für das Teilnetz SN2 der Netzknoten N3 und für das Teilnetz SN3 der Netzknoten N5. Diese Netzknoten N1, N3 und N5 übernehmen auch die Funktion eines lokalen Masterknotens LM zur lokalen Synchronisierung, wobei die lokale Synchronisierung weiter unten beschrieben wird. Darüber hinaus stellen die einzelnen Netzknoten N9, N10, ..., N14, welche keinem Teilnetz zugeordnet sind, ebenfalls globale Slaveknoten GS dar.

Im Rahmen der globalen Synchronisierung werden durch Austausch von ersten Synchronisationsnachrichten zwischen dem globalen Masterknoten GM und den globalen Slaveknoten GS die Uhren der globalen Slaveknoten auf die Uhr des globalen Masterknotens synchronisiert. Eine erste Synchronisationsnachricht ist in Fig. 1 dabei beispielhaft mit dem Bezugszeichen SYN1 bezeichnet. Die Synchronisation mittels der ersten Synchronisationsnachrichten basiert auf dem aus dem Stand der Technik bekannten Precision Time Protocol (Standard IEEE 1588 bzw. IEEE 1588v2). Im Rahmen dieses Standards sendet der globale Masterknoten GM eine erste Synchronisationsnachricht mit einem Zeitstempel seiner Uhr zum Aussendezeitpunkt aus. Die globalen Slaveknoten GS verarbeiten diese Information und senden erneut erste Synchronisationsnachrichten aus. Dabei addiert jeder Slaveknoten die geschätzte Verzögerung zwischen dem Aussendezeitpunkt der Synchronisationsnachricht im vorhergehenden Knoten und seinem eigenen Aussendezeitpunkt zu den Zeitstempeln der empfangenen Synchronisationsnachricht hinzu. Mit der Zeitinformation in einer empfangenen ersten Synchronisationsnachricht kann sich ein globaler Slaveknoten auf die Uhr des globalen Masterknotens synchronisieren.

Die ersten Synchronisationsnachrichten werden in dem Kommunikationsnetz auch zwischen Netzknoten ausgetauscht, welche keine globalen Slaveknoten sind. Dabei addiert jeder Netzknoten, der eine erste Synchronisationsnachricht empfängt, die oben beschriebene geschätzte Verzögerung in der Nachricht hinzu. Eine Synchronisation auf die Uhr des globalen Masterknotens GM wird jedoch nur von den globalen Slaveknoten GS durchgeführt. Das heißt, die anderen Knoten, nämlich die Knoten N2, N4 und N6, synchronisieren sich nicht auf die Uhr des globalen Masterknotens, auch wenn sie erste Synchronisationsnachrichten verarbeiten und weiterleiten.

Neben der soeben erläuterten globalen Synchronisation wird in jedem der Teilnetze SN1 bis SN4 auch separat eine lokale Synchronisation der Netzknoten der Teilnetze durchgeführt. Diese lokale Synchronisation läuft auch bei Ausfall der globalen Synchronisation weiter, so dass die Aufgaben der Netzknoten der Teilnetze weiter durchgeführt werden können. Im Rahmen der lokalen Synchronisation der einzelnen Teilnetze stellen die Netzknoten N1, N3, N5 und N7 ferner lokale Masterknoten LM dar. Durch einen Austausch von zweiten Synchronisationsnachrichten SYN2 in jedem Teilnetz wird die Uhr des entsprechenden Knoten N2, N4, N6 bzw. N8 auf die Uhr des lokalen Masterknotens N1, N3, N5 bzw. N7 synchronisiert. Die lokale Synchronisation basierend auf den zweiten Synchronisationsnachrichten verwendet wiederum das Precision Time Protocol, das analog zur globalen Synchronisierung nunmehr jedoch nur lokal in den einzelnen Teilnetzen durchgeführt wird.

In einer bevorzugten Ausführungsform werden die einzelnen Teilnetze SN1 bis SN4 als sog. VLANs konfiguriert. Über einen sog. VLAN-Tag des Ethernet-Frames der zweiten Synchronisationsnachricht wird dabei spezifiziert, zu welchem VLAN die zweite Synchronisationsnachricht gehört. Hierdurch kann erreicht werden, dass zweite Synchronisationsnachrichten nur in dem zugehörigen Teilnetz weitergeleitet werden. In dem Netz der Fig. 1 umfassen die einzelnen Teilnetze immer nur ein Paar aus Netzknoten. Nichtsdestotrotz kann in anderen Anwendungen auch eine wesentlich größere Anzahl von Netzknoten in den einzelnen Teilnetzen vorgesehen sein.

In jedem der Teilnetze der Fig. 1 sind Mechanismen implementiert, um Fehler in der globalen und lokalen Synchronisation festzustellen. Beispielsweise kann ein Fehler in der globalen bzw. lokalen Synchronisation über Prüfsummen in den ersten bzw. zweiten Synchronisationsnachrichten festgestellt werden. Kann die Prüfsumme der Nachricht nicht verifiziert werden, ist die entsprechende Synchronisationsnachricht fehlerhaft und es wird ein Fehler in der globalen bzw. lokalen Synchronisation detektiert. Ein weiterer Mechanismus zur Detektion eines Fehlers in der globalen Synchronisation kann darin bestehen, dass festgestellt wird, dass in den entsprechenden Netzknoten N1, N3 und N5 keine ersten Synchronisationsnachrichten mehr empfangen werden.

Wird nunmehr in einem Teilnetz ein Fehler in der Synchronisation detektiert, der außerhalb dieses Teilnetzes verursacht wurde, synchronisiert sich der entsprechende globale Slaveknoten GS nicht mehr auf die Uhr des globalen Masterknotens GM, um zu verhindern, dass seine Uhr falsch eingestellt wird. Unabhängig davon wird jedoch die lokale Synchronisation in dem Teilnetz fortgesetzt, so dass Funktionen des Teilnetzes weiterhin durchgeführt werden können, auch wenn die globale Synchronisation zwischen den Netzknoten nicht mehr funktioniert. Analog setzen auch die einzelnen, nicht zu einem Teilnetz gehörigen Netzknoten N9 bis N14 die globale Synchronisation ihrer Uhren auf den globalen Master GM nicht weiter fort, wenn sie einen Fehler in der globalen Synchronisation detektieren, der nicht durch sie selbst verursacht ist. Nichtsdestotrotz können die einzelnen Netzknoten die ihnen zugeordnete Funktion ggf. weiterhin durchführen.

Wird demgegenüber von einem einzelnen Netzknoten bzw. einem Netzknoten in einem Teilnetz ein Fehler in der Synchronisation detektiert, der im entsprechenden Teilnetz bzw. durch den einzelnen Netzknoten verursacht worden ist, wird der einzelne Netzknoten bzw. das Teilnetz in dem Kommunikationsnetz abgeschaltet. Hierdurch werden Fehlfunktionen in dem Kommunikationsnetz effektiv vermieden.

Die im Vorangegangenen beschriebene Ausführungsform der Erfindung weist eine Reihe von Vorteilen auf. Insbesondere wird durch die Verwendung einer globalen und einer lokalen Synchronisation erreicht, dass zufällige Hardware-Fehler im globalen Masterknoten nicht zum Ausfall der Synchronisation in allen Teilnetzen führen. Vielmehr wird die lokale Synchronisation der Netzknoten in den Teilnetzen aufrecht erhalten, so dass die Teilnetze weiterhin mittels der lokalen Synchronisation funktionsfähig bleiben. Demzufolge stellt der Ausfall der globalen Synchronisation keinen Totalausfall aller Netzknoten in dem Kommunikationsnetz dar.

## Patentansprüche

1. Verfahren zur Zeitsynchronisation in einem Kommunikationsnetz mit einer Vielzahl von Netzknoten (N1, N2, ..., N14), wobei die Netzknoten (N1, N2, ..., N14) jeweils eine Uhr umfassen und ein Netzknoten (N7) ein globaler Masterknoten (GM) ist, auf dessen Uhr die Uhren von anderen Netzknoten (N1, N2, ..., N14) zu synchronisieren sind, wobei in dem Kommunikationsnetz ein oder mehrere Teilnetze (SN1, SN2, SN3, SN4) festgelegt sind, welche jeweils mehrere Netzknoten (N1, N2, ..., N14) aus dem Kommunikationsnetz umfassen,
wobei eines oder mehrere der Teilnetze vorbestimmte Teilnetze (SN1, SN2, SN3) darstellen, in denen jeweils ein vorbestimmter Netzknoten (N1, N3, N5) sowohl die Funktion eines globalen Slaveknotens (GS) als auch die Funktion eines lokalen Masterknotens (LM) hat und der oder die anderen Netzknoten (N2, N4, N6, N8) des jeweiligen vorbestimmten Teilnetzes (SN1, SN2, SN3) lokale Slaveknoten (LS) sind, wobei
- eine globale Synchronisation durchgeführt wird, bei der zwischen Netzknoten (N1, N2, ..., N14) erste Synchronisationsnachrichten (SYN1) mit einer Zeitinformation übermittelt werden, welche auf der Uhr des globalen Masterknotens (GM) basiert, und sich die vorbestimmten Netzknoten (N1, N3, N5) in ihrer Funktion als globale Slaveknoten (GS) auf die Uhr des globalen Masterknotens (GM) synchronisieren;
- in jedem vorbestimmten Teilnetz (SN1, SN2, SN3) eine lokale Synchronisation durchgeführt wird, bei der zwischen Netzknoten (N1, N2, ..., N14) zweite Synchronisationsnachrichten (SYN2) mit einer Zeitinformation übermittelt werden, welche auf der Uhr des vorbestimmten Netzknotens (N1, N3, N5) des jeweiligen vorbestimmten Teilnetzes (SN1, SN2, SN3) in seiner Funktion als lokaler Masterknoten (LM) basiert, wobei sich die lokalen Slaveknoten (LS) des jeweiligen vorbestimmten Teilnetzes (SN1, SN2, SN3) auf die Uhr des vorbestimmten Netzknotens (N1, N3, N5) synchronisieren;
- im Falle, dass in einem vorbestimmten Teilnetz (SN1, SN2, SN3) ein außerhalb des vorbestimmten Teilnetzes (SN1, SN2, SN3) verursachter Fehler in der globalen Synchronisation detektiert wird, der vorbestimmte Netzknoten (N1, N3, N5) des vorbestimmten Teilnetzes (SN1, SN2, SN3) die Synchronisation seiner Uhr auf die Uhr des globalen Masterknotens (GM) abbricht, wobei die lokale Synchronisation in dem vorbestimmten Teilnetz (SN1, SN2, SN3) fortgesetzt wird, in dem vorbestimmten Teilnetz (SN1, SN2, SN3) ein Fehler in der globalen Synchronisation dann detektiert wird, wenn der vorbestimme Netzknoten (N1, N3, N5) feststellt, dass eine empfangene erste Synchronisationsnachricht (SYN1) fehlerhaft ist, und/oder wenn der vorbestimmte Netzknoten (N1, N2, N3) feststellt, dass eine Abweichung zwischen einer sich aus den ersten Synchronisationsnachrichten (SYN1) ergebenden Zeit und einer sich aus den zweiten Synchronisationsnachrichten (SYN2) ergebenen Zeit aus der Uhr des vorbestimmten Netzknotens (N1, N2, N3) eine vorbestimmte Schwelle überschreitet.

2. Verfahren nach Anspruch 1, bei dem die globale und/oder die lokale Synchronisation auf dem Standard IEEE 1588 oder IEEE 1588v2 oder IEC 61158 oder IEEE 802.1AS basiert.

3. Verfahren nach Anspruch 1 oder 2, bei dem das Kommunikationsnetz ferner einen oder mehrere einzelne Netzknoten (N9, N10, ..., N14) umfasst, welche zu keinem Teilnetz (SN1, SN2, SN3, SN4) gehören, wobei die einzelnen Netzknoten (N9, N10, ..., N14) in die globalen Synchronisation einbezogen werden.

4. Verfahren nach einem der vorhergehenden Ansprüche, bei dem neben dem oder den vorbestimmten Teilnetzen (SN1, SN2, SN3) ein weiteres Teilnetz (SN4) aus mehreren Netzknoten (N7, N8) in dem Kommunikationsnetz enthalten ist,
- wobei das weitere Teilnetz (SN4) den globalen Masterknoten (GM) umfasst, der ferner die Funktion eines lokalen Masterknotens (LM) hat, und der oder die anderen Netzknoten (N8) des weiteren Teilnetzes (SN4) lokale Slaveknoten (LS) sind,
- wobei in dem weiteren Teilnetz (SN4) eine lokale Synchronisation durchgeführt wird, bei der zwischen Netzknoten (N1, N2, ..., N14) zweite Synchronisationsnachrichten (SYN2) mit einer Zeitinformation übermittelt werden, welche auf der Uhr des globalen Masterknotens (GM) in seiner Funktion als lokaler Masterknoten (LM) basiert, wobei sich die lokalen Slaveknoten (LS) des weiteren Teilnetzes (SN4) auf die Uhr des globalen Masterknotens (GM) synchronisieren.

5. Verfahren nach Anspruch 4, bei dem alle Teilnetze des Kommunikationsnetzes bis auf das weitere Teilnetz (SN4) vorbestimmte Teilnetze (SN1, SN2, SN3) sind.

6. Verfahren nach einem der vorhergehenden Ansprüche, bei dem die zweiten Synchronisationsnachrichten (SYN2) ausschließlich zwischen Netzknoten des jeweiligen Teilnetzes (SN1, SN2, SN3, SN4) übermittelt werden, in dem die lokale Synchronisation durchgeführt wird.

7. Verfahren nach einem der vorhergehenden Ansprüche, bei dem in den zweiten Synchronisationsnachrichten (SYN2) jeweils spezifiziert ist, zu welchem Teilnetz (SN1, SN2, SN3, SN4) die zweite Synchronisationsnachricht (SYN) gehört.

8. Verfahren nach einem der vorhergehenden Ansprüche, bei dem die Teilnetze (SN1, SN2, SN3, SN4) VLANs im Kommunikationsnetz darstellen.

9. Verfahren nach einem der vorhergehenden Ansprüche, bei dem in einem vorbestimmten Teilnetz (SN1, SN2, SN3) ein Fehler in der globalen Synchronisation dann detektiert wird, wenn in dem vorbestimmten Netzknoten (N1, N3, N5) des vorbestimmten Teilnetzes (SN1, SN2, SN3) innerhalb einer vorgegebenen Zeitspanne keine erste Synchronisationsnachricht (SYN1) mehr empfangen wird.

10. Verfahren nach einem der vorhergehenden Ansprüche, bei dem im Falle, dass in einem Teilnetz (SN1, SN2, SN3, SN4) oder in einem einzelnen, zu keinem Teilnetz (SN1, SN2, SN3, SN4) gehörigen Netzknoten (N9, N10, ..., N14) ein Fehler in der globalen und/oder lokalen Synchronisation detektiert wird, der in dem Teilnetz (SN1, SN2, SN3, SN4) oder dem einzelnen Netzknoten (N9, N10, ..., N14) verursacht ist, das Teilnetz (SN1, SN2, SN3, SN4) oder der einzelne Netzknoten (N9, N10, ..., N14) in dem Kommunikationsnetz deaktiviert wird.

11. Verfahren nach einem der vorhergehenden Ansprüche, bei dem jedem Teilnetz (SN1, SN2, SN3) eine vorbestimmte Funktion zugeordnet ist, welche durch die Netzknoten (N1, N2, ..., N14) des jeweiligen Teilnetzes (SN1, SN2, SN3, SN4) ausgeführt wird.

12. Verfahren nach Anspruch 11, bei dem die Netzknoten (N1, N2, ..., N14) eines jeweiligen Teilnetzes (SN1, SN2, SN3, SN4) die vorbestimmte Funktion gemeinsam durchführen oder redundante Netzknoten sind, welche die gleiche vorbestimmte Funktion durchführen.

13. Verfahren nach einem der vorhergehenden Ansprüche, bei dem das Kommunikationsnetz Bestandteil eines Verkehrsmittels ist, insbesondere eines Schienenfahrzeugs oder eines Kraftfahrzeugs oder eines Flugzeugs, wobei die Netzknoten (N1, N2, ..., N14) Steuereinheiten im Verkehrsmittel repräsentieren.

14. Kommunikationsnetz mit einer Vielzahl von Netzknoten (N1, N2, ..., N14), wobei die Netzknoten (N1, N2, ..., N14) jeweils eine Uhr umfassen und ein Netzknoten (N7) ein globaler Masterknoten (GM) ist, auf dessen Uhr die Uhren von anderen Netzknoten (N1, N2, ..., N14) zu synchronisieren sind, wobei in dem Kommunikationsnetz ein oder mehrere Teilnetze (SN1, SN2, SN3, SN4) festgelegt sind, welche jeweils mehrere Netzknoten (N1, N2, ..., N14) aus dem Kommunikationsnetz umfassen, wobei eines oder mehrere der Teilnetze vorbestimmte Teilnetze (SN1, SN2, SN3) darstellen, in denen jeweils ein vorbestimmter Netzknoten (N1, N3, N5) sowohl die Funktion eines globalen Slaveknotens (GS) als auch die Funktion eines lokalen Masterknotens (LM) hat und der oder die anderen Netzknoten (N2, N4, N6, N8) des jeweiligen vorbestimmten Teilnetzes (SN1, SN2, SN3) lokale Slaveknoten (LS) sind, wobei die Netzknoten (N1, N2, ..., N14) zur Durchführung eines Verfahrens zur Zeitsynchronisation eingerichtet sind, bei dem
- eine globale Synchronisation durchgeführt wird, bei der zwischen Netzknoten (N1, N2, ..., N14) erste Synchronisationsnachrichten (SYN1) mit einer Zeitinformation übermittelt werden, welche auf der Uhr des globalen Masterknotens (GM) basiert, und sich die vorbestimmten Netzknoten (N1, N3, N5) in ihrer Funktion als globale Slaveknoten (GS) auf die Uhr des globalen Masterknotens (GM) synchronisieren;
- in jedem vorbestimmten Teilnetz (SN1, SN2, SN3) eine lokale Synchronisation durchgeführt wird, bei der zwischen Netzknoten (N1, N2, ..., N14) zweite Synchronisationsnachrichten (SYN2) mit einer Zeitinformation übermittelt werden, welche auf der Uhr des vorbestimmten Netzknotens (N1, N3, N5) des jeweiligen vorbestimmten Teilnetzes (SN1, SN2, SN3) in seiner Funktion als lokaler Masterknoten (LM) basiert, wobei sich die lokalen Slaveknoten (LS) des jeweiligen vorbestimmten Teilnetzes (SN1, SN2, SN3) auf die Uhr des vorbestimmten Netzknotens (N1, N3, N5) synchronisieren;
- im Falle, dass in einem vorbestimmten Teilnetz (SN1, SN2, SN3) ein außerhalb des vorbestimmten Teilnetzes (SN1, SN2, SN3) verursachter Fehler in der globalen Synchronisation detektiert wird, der vorbestimmte Netzknoten (N1, N3, N5) des vorbestimmten Teilnetzes (SN1, SN2, SN3) die Synchronisation seiner Uhr auf die Uhr des globalen Masterknotens (GM) abbricht, wobei die lokale Synchronisation in dem vorbestimmten Teilnetz (SN1, SN2, SN3) fortgesetzt wird, in dem vorbestimmten Teilnetz (SN1, SN2, SN3) ein Fehler in der globalen Synchronisation dann detektiert wird, wenn der vorbestimme Netzknoten (N1, N3, N5) feststellt, dass eine empfangene erste Synchronisationsnachricht (SYN1) fehlerhaft ist, und/oder wenn der vorbestimmte Netzknoten (N1, N2, N3) feststellt, dass eine Abweichung zwischen einer sich aus den ersten Synchronisationsnachrichten (SYN1) ergebenden Zeit und einer sich aus den zweiten Synchronisationsnachrichten (SYN2) ergebenen Zeit aus der Uhr des vorbestimmten Netzknotens (N1, N2, N3) eine vorbestimmte Schwelle überschreitet.

15. Kommunikationsnetz nach Anspruch 14, wobei das Kommunikationsnetz derart ausgestaltet ist, dass ein Verfahren nach einem der Ansprüche 2 bis 13 in dem Kommunikationsnetz durchführbar ist.

## Claims

1. Method for time synchronization in a communications network with a plurality of network nodes (N1, N2, ..., N14), wherein the network nodes (N1, N2, ..., N14) in each case comprise a clock and a network node (N7) is a global master node (GM) to the clock of which the clocks of other network nodes (N1, N2, ..., N14) are to be synchronized, wherein, in the communications network, one or more subnetworks (SN1, SN2, SN3, SN4) are specified which in each case comprise a plurality of network nodes (N1, N2, ..., N14) from the communications network,
wherein one or more of the subnetworks represent predetermined subnetworks (SN1, SN2, SN3) in which in each case a predetermined network node (N1, N3, N5) has both the function of a global slave node (GS) and the function of a local master node (LM) and the other network node or network nodes (N2, N4, N6, N8) of the respective predetermined subnetwork (SN1, SN2, SN3) are local slave nodes (LS), wherein
- a global synchronization is performed in which first synchronization messages (SYN1) are transmitted between network nodes (N1, N2, ..., N14) with a time information item which is based on the clock of the global master node (GM) and the predetermined network nodes (N1, N3, N5), in their function as global slave nodes (GS), become synchronized to the clock of the global master node (GM);
- in each predetermined subnetwork (SN1, SN2, SN3), a local synchronization is performed in which second synchronization messages (SYN2) are transmitted between network nodes (N1, N2, ..., N14) with a time information item which is based on the clock of the predetermined network node (N1, N3, N5) of the respective predetermined subnetwork (SN1, SN2, SN3) in its function as local master node (LM), wherein the local slave nodes (LS) of the respective predetermined subnetwork (SN1, SN2, SN3) become synchronized to the clock of the predetermined network node (N1, N3, N5);
- in the case that, in a predetermined subnetwork (SN1, SN2, SN3), a fault caused outside the predetermined subnetwork (SN1, SN2, SN3) is detected in the global synchronization, the predetermined network node (N1, N3, N5) of the predetermined subnetwork (SN1, SN2, SN3) aborts the synchronization of its clock to the clock of the global master node (GM), the local synchronization being continued in the predetermined subnetwork (SN1, SN2, SN3), and a fault being detected in the global synchronization in the predetermined subnetwork (SN1, SN2, SN3) if the predetermined network node (N1, N3, N5) determines that a received first synchronization message (SYN1) is faulty and/or if the predetermined network node (N1, N2, N3) determines that a deviation between a time resulting from the first synchronization messages (SYN1) and a time resulting from the second synchronization messages (SYN2) from the clock of the predetermined network node (N1, N2, N3) exceeds a predetermined threshold.

2. Method according to Claim 1, in which the global and/or the local synchronization is based on the IEEE 1588 or IEEE 1588v2 or IEC 61158 or IEEE 802.1AS standard.

3. Method according to Claim 1 or 2, in which the communications network also comprises one or more single network nodes (N9, N10, ..., N14) which do not belong to any subnetwork (SN1, SN2, SN3, SN4), the single network nodes (N9, N10, ..., N14) being included in the global synchronization.

4. Method according to one of the preceding claims, in which, apart from the predetermined subnetwork or subnetworks (SN1, SN2, SN3), a further subnetwork (SN4) of a plurality of network nodes (N7, N8) is contained in the communications network,
- the further subnetwork (SN4) comprising the global master node (GM) which also has the function of a local master node (LM), and the other network node or network nodes (N8) of the further subnetwork (SN4) being local slave nodes (LS),
- a local synchronization being performed in the further subnetwork (SN4) in which second synchronization messages (SYN2) are transmitted between network nodes (N1, N2, ..., N14) with a time information item which is based on the clock of the global master node (GM) in its function as local master node (LM), the local slave nodes (LS) of the further subnetwork (SN4) becoming synchronized to the clock of the global master node (GM).

5. Method according to Claim 4, in which all subnetworks of the communications network, apart from the further subnetwork (SN4), are predetermined subnetworks (SN1, SN2, SN3).

6. Method according to one of the preceding claims, in which the second synchronization messages (SYN2) are transmitted exclusively between network nodes of the respective subnetwork (SN1, SN2, SN3, SN4) in which the local synchronization is performed.

7. Method according to one of the preceding claims, in which, in the second synchronization messages (SYN2), it is specified in each case which subnetwork (SN1, SN2, SN3, SN4) the second synchronization message (SYN) belongs to.

8. Method according to one of the preceding claims, in which the subnetworks (SN1, SN2, SN3, SN4) represent VLANs in the communications network.

9. Method according to one of the preceding claims, in which, in a predetermined subnetwork (SN1, SN2, SN3), a fault is detected in the global synchronization if, in the predetermined network node (N1, N3, N5) of the predetermined subnetwork (SN1, SN2, SN3), no further first synchronization message (SYN1) is received within a predetermined time interval.

10. Method according to one of the preceding claims, in which, in the case that, in a subnetwork (SN1, SN2, SN3, SN4) or in an individual network node (N9, N10, ..., N14) belonging to no subnetwork (SN1, SN2, SN3, SN4), a fault is detected in the global and/or local synchronization which is caused in the subnetwork (SN1, SN2, SN3, SN4) or the individual network node (N9, N10, ..., N14), the subnetwork (SN1, SN2, SN3, SN4) or the individual network node (N9, N10, ..., N14) in the communications network is deactivated.

11. Method according to one of the preceding claims, in which each subnetwork (SN1, SN2, SN3) is allocated a predetermined function which is executed by the network nodes (N1, N2, ..., N14) of the respective subnetwork (SN1, SN2, SN3, SN4).

12. Method according to Claim 11, in which the network nodes (N1, N2, ..., N14) of a respective subnetwork (SN1, SN2, SN3, SN4) perform the predetermined function jointly or are redundant network nodes which perform the same predetermined function.

13. Method according to one of the preceding claims, in which the communications network is a component of a means of transportation, particularly of a rail vehicle or of a motor vehicle or of an aircraft, the network nodes (N1, N2, ..., N14) representing control units in the means of transportation.

14. Communications network with a plurality of network nodes (N1, N2, ..., N14), the network nodes (N1, N2, ..., N14) in each case comprising a clock and a network node (N7) being a global master node (GM) to the clock of which the clocks of other network nodes (N1, N2, ..., N14) are to be synchronized, one or more subnetworks (SN1, SN2, SN3, SN4) being specified in the communications network which in each case comprise a plurality of network nodes (N1, N2, ..., N14) from the communications network, one or more of the subnetworks representing predetermined subnetworks (SN1, SN2, SN3) in which in each case a predetermined network node (N1, N3, N5) has both the function of a global slave node (GS) and the function of a local master node (LM) and the other network node or network nodes (N2, N4, N6, N8) of the respective predetermined subnetwork (SN1, SN2, SN3) being local slave nodes (LS), the network nodes (N1, N2, ..., N14) being arranged for performing a method for time synchronization in which
- a global synchronization is performed in which first synchronization messages (SYN1) are transmitted between network nodes (N1, N2, ..., N14) with a time information item which is based on the clock of the global master node (GM) and the predetermined network nodes (N1, N3, N5), in their function as global slave nodes (GS), become synchronized to the clock of the global master node (GM);
- in each predetermined subnetwork (SN1, SN2, SN3), a local synchronization is performed in which second synchronization messages (SYN2) are transmitted between network nodes (N1, N2, ..., N14) with a time information item which is based on the clock of the predetermined network node (N1, N3, N5) of the respective predetermined subnetwork (SN1, SN2, SN3) in its function as local master node (LM), the local slave nodes (LS) of the respective predetermined subnetwork (SN1, SN2, SN3) becoming synchronized to the clock of the predetermined network node (N1, N3, N5);
- in the case that, in a predetermined subnetwork (SN1, SN2, SN3), a fault caused outside the predetermined subnetwork (SN1, SN2, SN3) is detected in the global synchronization, the predetermined network node (N1, N3, N5) of the predetermined subnetwork (SN1, SN2, SN3) aborts the synchronization of its clock to the clock of the global master node (GM), the local synchronization being continued in the predetermined subnetwork (SN1, SN2, SN3), and a fault being detected in the global synchronization in the predetermined subnetwork (SN1, SN2, SN3) if the predetermined network node (N1, N3, N5) determines that a received first synchronization message (SYN1) is faulty and/or if the predetermined network node (N1, N2, N3) determines that a deviation between a time resulting from the first synchronization messages (SYN1) and a time resulting from the second synchronization messages (SYN2) from the clock of the predetermined network node (N1, N2, N3) exceeds a predetermined threshold.

15. Communications network according to Claim 14, the communications network being designed in such a manner that a method according to one of Claims 2 to 13 can be performed in the communications network.

## Revendications

1. Procédé de synchronisation temporelle dans un réseau de communication comprenant une pluralité de nœuds de réseau (N1, N2, ..., N14), dans lequel les nœuds de réseau (N1, N2, ..., N14) comprennent respectivement une horloge, et un nœud de réseau (N7) est un nœud maître global (GM) sur l'horloge duquel les horloges d'autres nœuds de réseau (N1, N2, ..., N14) doivent se synchroniser, dans lequel dans le réseau de communication, un ou plusieurs réseau(x) partiel(s) (SN1, SN2, SN3, SN4) sont définis, lesquels comprennent respectivement plusieurs nœuds de réseau (N1, N2, ..., N14) du réseau de communication,
dans lequel un ou plusieurs des réseaux partiels représente(nt) des réseaux partiels (SN1, SN2, SN3) prédéterminés, respectivement un nœud de réseau (N1, N3, N5) prédéterminé ayant tant la fonction d'un nœud esclave global (GS) qu'également la fonction d'un nœud maître local (LM) et le ou les autres nœuds de réseau (N2, N4, N6, N8) du réseau partiel (SN1, SN3, SN5) prédéterminé respectif sont des nœuds esclaves locaux (LS), dans lequel
- une synchronisation globale est effectuée, dans laquelle sont transmis entre des nœuds de réseau (N1, N2, ..., N14), des premiers messages de synchronisation (SYN1) avec une information temporelle, laquelle est basée sur l'horloge du nœud maître global (GM) et les nœuds de réseau (N1, N3, N5) prédéterminés se synchronisent sur l'horloge du nœud maître global (GM), dans leur fonction en tant que nœuds esclaves globaux (GS) ;
- dans chaque réseau partiel (SN1, SN2, SN3) prédéterminé, une synchronisation locale est effectuée, dans laquelle sont transmis entre des nœuds de réseau (N1, N2, ..., N14), des deuxièmes messages de synchronisation (SYN2) avec une information temporelle, laquelle est basée sur l'horloge du nœud de réseau (N1, N3, N5) prédéterminé du réseau partiel (SN1, SN2, SN3) prédéterminé respectif dans sa fonction en tant que nœud maître local (LM), dans lequel les nœuds esclaves locaux (LS) du réseau partiel (SN1, SN2, SN3) prédéterminé respectif se synchronisent sur l'horloge du nœud de réseau (N1, N3, N5) prédéterminé ;
- dans le cas où dans un réseau partiel (SN1, SN2, SN3) prédéterminé, une erreur provoquée hors du réseau partiel (SN1, SN2, SN3) prédéterminé est détectée dans la synchronisation globale, le nœud de réseau (N1, N3, N5) prédéterminé du réseau partiel (SN1, SN2, SN3) prédéterminé interrompt la synchronisation de son horloge sur l'horloge du nœud maître global (GM), dans lequel la synchronisation locale est poursuivie dans le réseau partiel (SN1, SN2, SN3) prédéterminé, une erreur dans la synchronisation globale dans le réseau partiel (SN1, SN2, SN3) prédéterminé est alors détectée lorsque le nœud de réseau (N1, N3, N5) prédéterminé constate qu'un premier message de synchronisation (SYN1) reçu est erroné, et/ou lorsque le nœud de réseau (N1, N3, N5) prédéterminé constate qu'un écart entre un temps résultant des premiers messages de synchronisation (SYN1) et un temps résultant des deuxièmes messages de synchronisation (SYN2) de l'horloge du nœud de réseau (N1, N3, N5) prédéterminé dépasse un seuil prédéterminé.

2. Procédé selon la revendication 1, dans lequel la synchronisation globale et/ou locale est basée sur la norme IEEE 1588 ou IEEE 1588v2 ou IEC 61158 ou IEEE 802.1AS.

3. Procédé selon la revendication 1 ou 2, dans lequel le réseau de communication comprend en outre un ou plusieurs nœuds de réseaux individuels (N9, N10, ..., N14) qui ne font partie d'aucun réseau partiel (SN1, SN2, SN3), dans lequel les nœuds de réseaux individuels (N9, N10, ..., N14) sont intégrés dans la synchronisation globale.

4. Procédé selon l'une des revendications précédentes, dans lequel outre le ou les réseau(x) partiel(s) (SN1, SN2, SN3) prédéterminé(s), un réseau partiel supplémentaire (SN4) de plusieurs nœuds de réseau (N7, N8) est contenu dans le réseau de communication,
- dans lequel le réseau partiel supplémentaire (SN4) comprend le nœud maître global (GM) qui a en outre la fonction d'un nœud maître local (LM) et le ou les autres nœuds de réseau (N8) du réseau partiel supplémentaire (SN4) sont des nœuds esclaves locaux (LS),
- dans lequel dans le réseau partiel supplémentaire (SN4), une synchronisation locale est effectuée, dans laquelle des deuxièmes messages de synchronisation (SYN2) avec une information temporelle sont transmis entre des nœuds de réseau (N1, N2, ..., N14), laquelle est basée sur l'horloge du nœud maître global (GM) dans sa fonction en tant que nœud maître local (LM), dans lequel les nœuds esclaves locaux (LS) du réseau partiel supplémentaire (SN4) se synchronisent sur l'horloge du nœud maître global (GM).

5. Procédé selon la revendication 4, dans lequel tous les réseaux partiels du réseau de communication, sauf le réseau partiel supplémentaire (SN4), sont des réseaux partiels (SN1, SN2, SN3) prédéterminés.

6. Procédé selon l'une des revendications précédentes, dans lequel les deuxièmes messages de synchronisation (SYN2) sont transmis exclusivement entre des nœuds de réseau du réseau partiel (SN1, SN2, SN3, SN4) respectif dans lequel la synchronisation locale est effectuée.

7. Procédé selon l'une des revendications précédentes, dans lequel dans les deuxièmes messages de synchronisation (SYN2), il est respectivement spécifié à quel réseau partiel (SN1, SN2, SN3, SN4) appartient le deuxième message de synchronisation (SYN2).

8. Procédé selon l'une des revendications précédentes, dans lequel les réseaux partiels (SN1, SN2, SN3, SN4) représentent des VLAN dans le réseau de communication.

9. Procédé selon l'une des revendications précédentes, dans lequel une erreur est détectée dans la synchronisation globale dans un réseau partiel (SN1, SN2, SN3) prédéterminé lorsque dans le nœud de réseau (N1, N3, N5) prédéterminé du réseau partiel (SN1, SN2, SN3) prédéterminé, plus aucun premier message de synchronisation (SYN1) n'est reçu dans un intervalle prédéfini.

10. Procédé selon l'une des revendications précédentes, dans lequel dans le cas où dans un réseau partiel (SN1, SN2, SN3, SN4) ou dans un nœud de réseau (N9, N10, ..., N14) individuel n'appartenant à aucun réseau partiel (SN1, SN2, SN3, SN4), une erreur est détectée dans la synchronisation globale et/ou locale qui est provoquée dans le réseau partiel (SN1, SN2, SN3, SN4) ou le nœud de réseau (N9, N10, ..., N14) individuel, le réseau partiel (SN1, SN2, SN3, SN4) ou le nœud de réseau (N9, N10, ..., N14) individuel est désactivé dans le réseau de communication.

11. Procédé selon l'une des revendications précédentes, dans lequel une fonction prédéterminée est attribuée à chaque réseau partiel (SN1, SN2, SN3), laquelle est exécutée par les nœuds de réseau (N1, N2, ..., N14) du réseau partiel (SN1, SN2, SN3, SN4) respectif.

12. Procédé selon la revendication 11, dans lequel les nœuds de réseau (N1, N2, ..., N14) d'un réseau partiel (SN1, SN2, SN3, SN4) respectif exécutent en commun la fonction prédéterminée ou sont des nœuds de réseau redondants qui exécutent la même fonction prédéterminée.

13. Procédé selon l'une des revendications précédentes, dans lequel le réseau de communication fait partie d'un moyen de transport, en particulier d'un véhicule ferroviaire ou d'un véhicule motorisé ou d'un avion, dans lequel les nœuds de réseau (N1, N2, ..., N14) représentent des unités de commande dans le moyen de transport.

14. Réseau de communication comprenant une pluralité de nœuds de réseau (N1, N2, ..., N14), dans lequel les nœuds de réseau (N1, N2, ..., N14) comprennent respectivement une horloge, et un nœud de réseau (N7) est un nœud maître global (GM) sur l'horloge duquel les horloges d'autres nœuds de réseau (N1, N2, ..., N14) doivent se synchroniser, dans lequel dans le réseau de communication, un ou plusieurs réseau(x) partiel(s) (SN1, SN2, SN3, SN4) sont définis, lesquels comprennent respectivement plusieurs nœuds de réseau (N1, N2, ..., N14) du réseau de communication, dans lequel un ou plusieurs des réseaux partiels représente(nt) des réseaux partiels (SN1, SN2, SN3) prédéterminés, respectivement un nœud de réseau (N1, N3, N5) prédéterminé ayant tant la fonction d'un nœud esclave global (GS) qu'également la fonction d'un nœud maître local (LM) et le ou les autres nœuds de réseau (N2, N4, N6, N8) du réseau partiel (SN1, SN3, SN5) prédéterminé respectif sont des nœuds esclaves locaux (LS), dans lequel les nœuds de réseau (N1, N2, ..., N14) sont équipés pour exécuter un procédé de synchronisation temporelle, dans lequel
- une synchronisation globale est effectuée, dans laquelle sont transmis entre des nœuds de réseau (N1, N2, ..., N14), des premiers messages de synchronisation (SYN1) avec une information temporelle, laquelle est basée sur l'horloge du nœud maître global (GM) et les nœuds de réseau (N1, N3, N5) prédéterminés se synchronisent sur l'horloge du nœud maître global (GM), dans leur fonction en tant que nœuds esclaves globaux (GS) ;
- dans chaque réseau partiel (SN1, SN2, SN3) prédéterminé, une synchronisation locale est effectuée, dans laquelle sont transmis entre des nœuds de réseau (N1, N2, ..., N14), des deuxièmes messages de synchronisation (SYN2) avec une information temporelle, laquelle est basée sur l'horloge du nœud de réseau (N1, N3, N5) prédéterminé du réseau partiel (SN1, SN2, SN3) prédéterminé respectif dans sa fonction en tant que nœud maître local (LM), dans lequel les nœuds esclaves locaux (LS) du réseau partiel (SN1, SN2, SN3) prédéterminé respectif se synchronisent sur l'horloge du nœud de réseau (N1, N3, N5) prédéterminé ;
- dans le cas où dans un réseau partiel (SN1, SN2, SN3) prédéterminé, une erreur provoquée hors du réseau partiel (SN1, SN2, SN3) prédéterminé est détectée dans la synchronisation globale, le nœud de réseau (N1, N3, N5) prédéterminé du réseau partiel (SN1, SN2, SN3) prédéterminé interrompt la synchronisation de son horloge sur l'horloge du nœud maître global (GM), dans lequel la synchronisation locale est poursuivie dans le réseau partiel (SN1, SN2, SN3) prédéterminé, une erreur dans la synchronisation globale dans le réseau partiel (SN1, SN2, SN3) prédéterminé est alors détectée constate lorsque le nœud de réseau (N1, N3, N5) prédéterminé constate qu'un premier message de synchronisation (SYN1) reçu est erroné, et/ou lorsque le nœud de réseau (N1, N3, N5) prédéterminé constate qu'un écart entre un temps résultant des premiers messages de synchronisation (SYN1) et un temps résultant des deuxièmes messages de synchronisation (SYN2) de l'horloge du nœud de réseau (N1, N3, N5) prédéterminé dépasse un seuil prédéterminé.

15. Réseau de communication selon la revendication 14, dans lequel le réseau de communication est ainsi conçu qu'un procédé selon l'une des revendications 2 à 13 peut être exécuté dans le réseau de communication.
